(19) **Europäisches Patentamt**
**European Patent Office**
**Office européen des brevets**

(11) **EP 1 857 902 A1**

(12) **EUROPEAN PATENT APPLICATION**

(43) Date of publication:
**21.11.2007 Bulletin 2007/47**

(51) Int Cl.:
*G05B 19/404* (2006.01)

(21) Application number: **06114156.0**

(22) Date of filing: **18.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SAAB AB**
**581 88 Linköping (SE)**

(72) Inventor: **STÅHL-GUNNARSSON, KARIN**
**587 29, LINKÖPING (SE)**

(74) Representative: **Norberg, Charlotte**
**Albihns Stockholm AB**
**P.O. 5581**
**114 85 Stockholm (SE)**

(54) **Method and device for controlling backlash**

(57)    The invention relates to a method for compensating for backlash of a control system, comprising the step of providing an input signal (u), the system producing an output signal (y), characterised by the steps of creating an error signal (e) from a comparison between the input signal and the output signal; feeding the error signal to the input signal to produce a compensated input signal; and feeding the compensated input signal to the backlash to produce a compensated output signal. The invention further relates to a control system for compensating for backlash. The invention still further relates to a computer programme comprising a programme code. The invention also relates to a computer programme product comprising a program code stored on a, by a computer readable, media. The invention finally relates to a computer programme product directly storable in an internal memory into a computer, comprising a computer programme.

Fig. 5a

## Description

TECHNICAL FIELD

The present invention relates to a method for compensating for backlash of a control systems according to the preamble of claim 1. The invention further relates to a control system for compensating for backlash according to the preamble of claim 6. The invention still further relates to a computer programme comprising a programme code according to claim 12. The invention also relates to a computer programme product comprising a program code stored on a, by a computer readable, media according to claim 13. The invention finally relates to a computer programme product directly storable in an internal memory into a computer, comprising a computer programme according to claim 14.

BACKGROUND

In a general control system there might be several kinds of nonlinearities, e.g. rate-limiters, hysteresis, friction, backlash etc. Usually linear tools are used to design the control system. In a high-performance system a lot of money and effort are spent in order to make the influence of the nonlinearities as small as possible. For instance, in an aircraft system, the hydraulic system is dimensioned in order to have high rates available and backlash in the actuators are made as small as possible. This of course increases the cost of such a project.

In a low budget project however, it might be impossible to manufacture the actuators with such a precision that the backlash can be neglected as not effecting the control system.

Backlash is a nonlinearity that is present in most mechanical and hydraulic systems such as e.g. power trains, industrial robots and aircraft control surfaces. For example, by transmitting a control command from within an aircraft to the physical hardware, i.e. the rudder, or e.g. in robots, drive lines on cars, power transmission etc. for example, small movements on a steering wheel may, due to backlash, e.g. a play in a gear or the like, lead to no turning movement of the wheels, whereas a bigger movement on the steering wheel results in an output signal, i.e. causes the wheels to turn.

There exists different solutions of how to compensate for the problem of backlash. For example neural networks or fuzzy logic, may give satisfactory results. However these methods results in compensation schemes including quite large number of parameters to be tuned, and hence is more complicated and time consuming, which may lead to increased costs.

Another method is the so called backlash inverse method. A problem with this method is that it can only be used if the backlash is situated at the input of the system and the width is well known. Undercompensation result in degraded performance and overcompensation might result in oscillations.

Filters that increase the input signal to the backlash such that the signal comes through the backlash, i.e. a type of linear controller design is another way of compensating for backlash. An example is the lead-lag filter. The problem is that the lead lag filter is always present, even in case of large input signal amplitudes, when the effect of the backlash is minor. This results in larger control rates, and thus unnecessary stress of actuators. The lead-lag filter functions well when the input signal is small, e.g. small movement of a rudder, where the lead-lag filter reduces the effect of backlash. By larger movements of e.g. the rudder the movement is increased due to the lead-lag filter, which results in a higher speed of movement of e.g. the rudder which in turn results in increased stresses and ware. As a consequence a more advanced device, e.g. rudder/servo which is able to handle the increased speed of e.g. the rudder movement may be required, which then increases the costs. For example aircrafts are controlled in three dimensions, i.e. three axes, and the same physical rudder may be used for control in different axes. The effect of the lead-lag filter is that the control of one axis affects the control of the other axes.

OBJECTS OF THE INVENTION

An object of the present invention is to provide a method for compensating for the backlash of a control system, which method is simple, does not require a large number of parameters to be tuned, and provides satisfactory result with both large and small input signals.

Another object of the present invention is to provide a control system for compensating for the backlash, which means is simple, does not require a large number of parameters to be tuned, and provides satisfactory result with both large and small input signals.

SUMMARY OF THE INVENTION

These and other objects, apparent from the following description, are achieved by a method, control system, computer programme, and computer programme products which are of the type stated by way of introduction and which in addition exhibits the features recited in the characterising clause of the appended claim 1, 6, 12, 13 and 14. Preferred embodiments of the inventive fastener are defined in appended subclaims 2-5, and 7-11.

By providing a method for compensating for backlash of a control system, comprising the step of providing an input signal, the system producing an output signal, which is characterised by the steps of creating an error signal from a comparison between the input signal and the output signal; feeding the error signal to the input signal to produce a compensated input signal; and feeding the compensated input signal to the backlash to produce a compensated output signal, the backlash is compensated in a simple way, not requiring a large number of parameters to be tuned, which compensates for the backlash when the input signal does not come through the backlash, but does not affect the output signal when the input signal and output signal are equal.

Preferably the method further comprises the step of amplifying the error signal prior to feeding it to the input signal. This further improves the compensation of the backlash in that the compensation is quicker and that gain and phase properties become more accurate, i.e. the gain is increased and the phase retardation is decreased.

Preferably the method further comprises the step of filtering the error signal through a low pass filter prior to feeding it to the input signal. The low pass filter acts stabilising by means of suppressing higher frequency components which occur due to non-linearity.

Preferably the method further comprises the step of measuring the output signal. By measuring the output signal a more accurate compensation of the backlash can be achieved, and there is no need for providing a software model.

Preferably the method further comprises the step of estimating the output signal from the backlash by means of a software model. This has the advantage that no measurement equipment is needed.

By providing a control system for compensating for backlash, which system is provided with an input signal and arranged to produce an output signal, wherein said control system comprises means for creating an error signal by means of comparing the input signal and the output signal, means for feeding the error signal to the input signal, and means for feeding the compensated input signal to the backlash to produce a compensated output signal, the backlash is compensated in a simple way, not requiring a large number of parameters to be tuned, which compensates for the backlash when the input signal does not come through the backlash, but does not affect the output signal when the input signal and output signal are equal.

Preferably the control system further comprises amplifying means arranged to amplify the error signal prior to feeding it to the input signal. This further improves the compensation of the backlash in that the compensation is quicker and that gain and phase properties become more accurate, i.e. the gain is increased and the phase retardation is decreased.

Preferably the control system further comprises a low pass filter arranged to filter the error signal prior to feeding it to the input signal. The low pass filter acts stabilising by means of suppressing higher frequency components which occur due to non-linearity.

Preferably the low pass filter has the transfer function G(s) according to:

where $\tau$ is a time constant and s is the Laplace transform.

Preferably the control system further comprises means for measuring the output signal. By measuring the output signal a more accurate compensation of the backlash can be achieved, and there is no need for providing a software model.

Preferably the control system further comprises a software model arranged to estimate the output signal. This has the advantage that no measurement equipment is needed.

There is further provided a computer programme comprising a programme code for performing the method for compensating for backlash of a control system, comprising the step of providing an input signal, the system producing an output signal, which is characterised by the steps of creating an error signal from a comparison between the input signal and the output signal; feeding the error signal to the input signal to produce a compensated input signal; and feeding the compensated input signal to the backlash to produce a compensated output signal, when said computer programme is run on a computer.

Preferably the computer programme comprises a programme code for performing the method step of amplifying the error signal prior to feeding it to the input signal, when said computer programme is run on a computer.

Preferably the computer programme comprises a programme code for performing the method step of filtering the error signal through a low pass filter prior to feeding it to the input signal, when said computer programme is run on a computer.

Preferably the computer programme comprises a programme code for performing the method the step of measuring the output signal, when said computer programme is run on a computer.

Preferably the computer programme comprises a programme code for performing the method the step of estimating the output signal from the backlash by means of a software model, when said computer programme is run on a computer.

There if further provided a computer programme product comprising a program code stored on a, by a computer readable, media for performing the method for compensating for backlash of a control system, comprising the step of providing an input signal, the system producing an output signal, which is characterised by the steps of creating an error signal from a comparison between the input signal and the output signal; feeding the error signal to the input signal to produce a compensated input signal; and feeding the compensated input signal to the backlash to produce a compensated output signal, when said computer programme is run on the computer.

Preferably the computer programme product comprises a programme code stored on a, by a computer readable, media for performing the method step of amplifying the error signal prior to feeding it to the input sig-

$$G(s) = \frac{K'}{\tau s + 1}$$

nal, when said computer programme is run on the computer.

Preferably the computer programme product comprises a programme code stored on a, by a computer readable, media for performing the method step of filtering the error signal through a low pass filter prior to feeding it to the input signal, when said computer programme is run on the computer.

Preferably the computer programme product comprises a programme code stored on a, by a computer readable, media for performing the method the step of measuring the output signal, when said computer programme is run on the computer.

Preferably the computer programme product comprises a programme code stored on a, by a computer readable, media for performing the method the step of estimating the output signal from the backlash by means of a software model, when said computer programme is run on the computer.

There is further provided a computer programme product directly storable in an internal memory into a computer, comprising a computer programme for performing the method for compensating for backlash of a control system, comprising the step of providing an input signal, the system producing an output signal, which is characterised by the steps of creating an error signal from a comparison between the input signal and the output signal; feeding the error signal to the input signal to produce a compensated input signal; and feeding the compensated input signal to the backlash to produce a compensated output signal, when said computer programme is run on the computer.

Preferably the computer programme product directly storable in an internal memory into a computer, comprises a computer programme for performing the method step of amplifying the error signal prior to feeding it to the input signal, when said computer programme is run on the computer.

Preferably the computer programme product directly storable in an internal memory into a computer, comprises a computer programme for performing the method step of filtering the error signal through a low pass filter prior to feeding it to the input signal, when said computer programme is run on the computer.

Preferably the computer programme product directly storable in an internal memory into a computer, comprises a computer programme for performing the method step of measuring the output signal, when said computer programme is run on the computer.

Preferably the computer programme product directly storable in an internal memory into a computer, comprises a computer programme for performing the method step of estimating the output signal from the backlash by means of a software model, when said computer programme is run on the computer.

DESCRIPTION OF THE DRAWINGS

A better understanding of the present invention will be had upon the reference to the following detailed description when read in conjunction with the accompanying drawings, wherein like reference characters refer to like parts throughout the several views, and in which:

Fig. 1 schematically shows a block diagram of a general control system;

Fig. 2a schematically shows a block diagram of the backlash;

Fig. 2b schematically shows a block diagram of a given backlash with an output signal for a specific input signal;

Fig. 3 schematically shows a diagram of the input and output signals from a system with backlash according to fig. 2b for different amplitudes of input signals;

Fig. 4 schematically shows a diagram of gain and phase properties of backlash for different amplitudes of input signals;

Fig. 5a schematically shows a diagram of a control system for compensating for backlash according to the invention;

Fig. 5b schematically shows a diagram of the control system for compensating for backlash in fig. 5a for a specific input signal;

Fig. 6 schematically shows a diagram of output signals from a system with backlash having the control system in fig. 5b for different amplitudes of input signals;

Fig. 7 schematically shows a diagram of gain and phase properties of backlash with the control system in fig. 5b;

Fig. 8 schematically shows a block diagram of an aircraft configuration for simulation of backlash;

Fig. 9a and 9b shows simulation results for the aircraft configuration in fig. 8 for lead-lag filter;

Fig. 10a and 10b shows simulation results for the aircraft configuration in fig. 8 for compensating filter according to the invention; and

Fig. 11a and 11b shows simulation results for the aircraft configuration in fig. 8 with no backlash.

DETAILED DESCRIPTION OF THE INVENTION

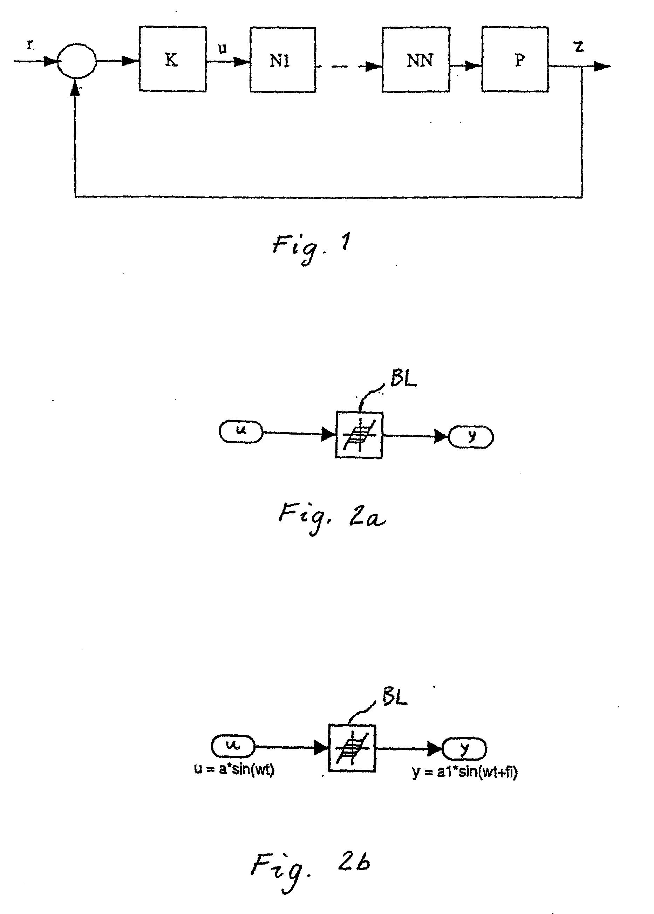

Fig. 1 schematically shows a block diagram of a general control system. The system comprises a reference signal r, which may be any parameter such as e.g. recommended height or angle with which an aircraft is supposed to ascend or descend and an output signal z. Here u is the input signal to the system to be controlled. N1 to NN represents nonlinear dynamics and P linear dynamics, where N1 to P represents the system to be controlled. The N and P units may be arbitrarily mixed. K is a linear regulator. A reference signal r is arranged to be introduced, then a current position is arranged to be calculated, and from the resulting error, i.e. r-z, a control signal is arranged to be calculated.

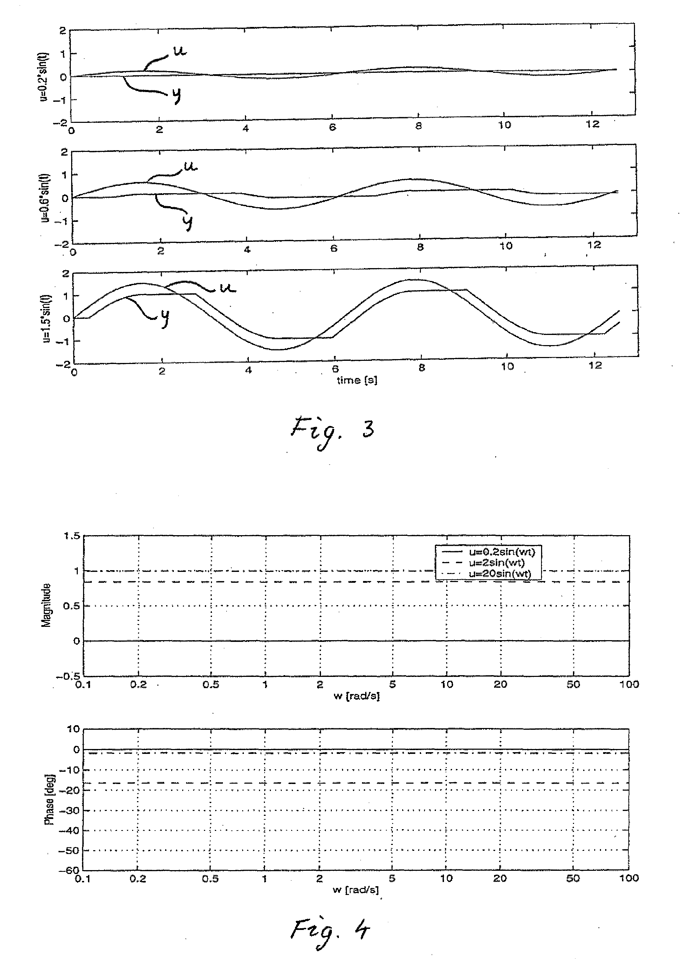

Fig. 2a schematically shows a block diagram of the backlash BL and fig. 2b schematically shows the block diagram in fig. 2a with specific input signal and specific backlash. In fig. 2b, the backlash BL is assumed to have a width 1 and a gain 1. With an input signal u = a*sin(wt) such a backlash results in an output signal y = a1*sin(wt+fi), i.e. the output signal has a different amplitude and has a phase displacement fi.

Fig. 3 schematically shows a diagram of an output signal from a system with backlash for different amplitudes of input signals. It has been found that when the input signal u is smaller than half the width of the backlash, the output signal y is zero. For input signals larger than half the backlash width, the backlash acts as a gain and phase retardation element. The gain and phase retardation depends on the input signal amplitude only.

The amplitude of the output signal y is the amplitude of the input signal u subtracted by half of the backlash, given that the input signal u has an amplitude larger than half of the backlash, and if not there is no output signal y, e.g. movement of rudder. In the example in fig. 3, for input amplitude of 0.2 there is no output signal y. When the amplitude of the input signal u is 0.6 there is an output signal y having amplitude of 0.1 and when the amplitude of the input signal is 1.5 there is output signal amplitude of 1, as can be seen in fig. 3. There is a phase displacement such that the output signal is triggered when the input signal has reached half of the backlash value, here 0.5.

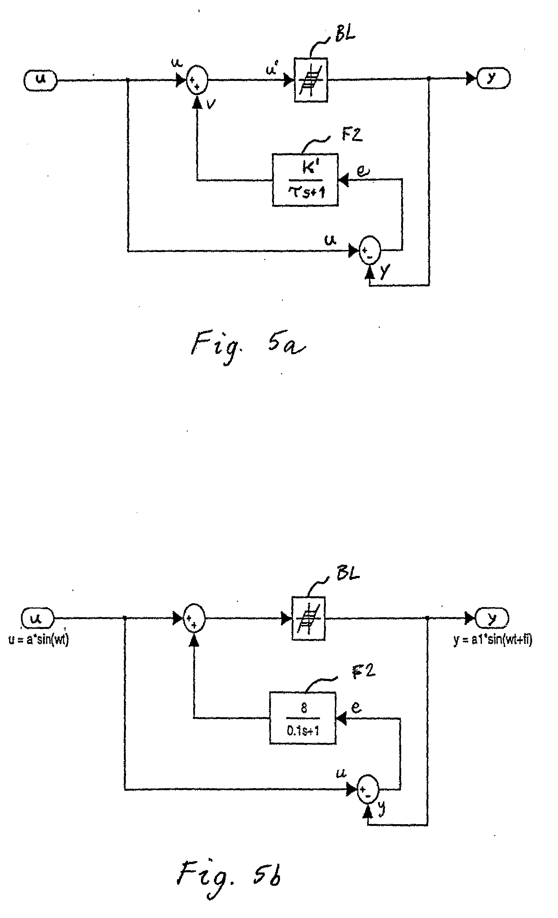

In order to analyse the effect of nonlinearity, like backlash in this case, the gain and phase properties as a function of input signal frequency can be derived and represented as a set of Bode diagrams depending on input signal amplitude. In fig. 4, a diagram of gain and phase properties of backlash is shown for a number of input signal amplitudes.

Fig. 5a schematically shows a diagram of a control system intended to be used for compensating for backlash of a control system with a compensating filter according to the invention. The control system comprises an input signal u and an output signal y, the output signal y being the result of an influence by backlash. An error signal e is arranged to be created by means of comparing the input signal u and the output signal y, e.g. by means of the difference u-y between the input signal u and the output signal y. The error signal e is then arranged to be amplified by means of amplifying means K', and filtered by means of a low pass filter F2, resulting in a signal v. The low pass filter has the general transfer function G(s):

$$G(s) = \frac{K'}{\tau s + 1}$$

where K' is the gain, $\tau$ is a time constant, and s is the Laplace transform = $2\pi f$, f being the frequency. The amplified and filtered error signal v is then arranged to be fed to the input signal, i.e. the signal v is added to the input signal u, resulting in a compensated input signal u' = u+v. If the input signal u and the output signal y are the same, i.e. if there is no backlash, the error signal will be zero, which means that the signal v will be zero, and thus u' = u, i.e. no overcompensation.

The inventive concept is the feedback of the error signal e, i.e. the difference between the input signal u and output signal y, to the input signal. By amplifying the error signal e the compensation of the backlash is improved in that the compensation is quicker and that gain and phase properties become more accurate, and by filtering the error signal through the low pass filter the filter acts stabilising by means of suppressing higher frequency components which occur due to non-linearity.

The backlash in the control system according to the invention is thus compensated according to the method comprising the steps of providing an input signal u, the system producing an output signal y, and the further steps of creating an error signal e from a comparison between the input signal u and the output signal y; amplifying the error signal; filtering the error signal through a low pass filter; feeding the error signal to the input signal to produce a compensated input signal u'; and feeding the compensated input signal u' to the backlash to produce a compensated output signal.

In the embodiment shown in fig. 5a it is assumed that it is possible to measure the output from the backlash. If this is not possible a software model of the backlash may according to an alternative embodiment be included, such that the output from the backlash is estimated by means of this model. Thus, the method for compensating for backlash in the control system comprises the step of measuring the output signal, or alternatively the step of estimating the output signal from the backlash by means of a software model.

Fig. 6 schematically shows a diagram of output signals from a system with backlash having the compensating filter in fig. 5b for different amplitudes of input signals. In fig. 5b the low pass filter F2 has the following parameter values: K' = 8 and $\tau$ = 0.1 s. The gain and width of the backlash is assumed to be 1. In fig. 6 it is shown that the effect of the backlash is reduced such that the output signal y is very similar to the input signal u for the different amplitudes, 0.2, 06 and 1.5, of the input signal u.

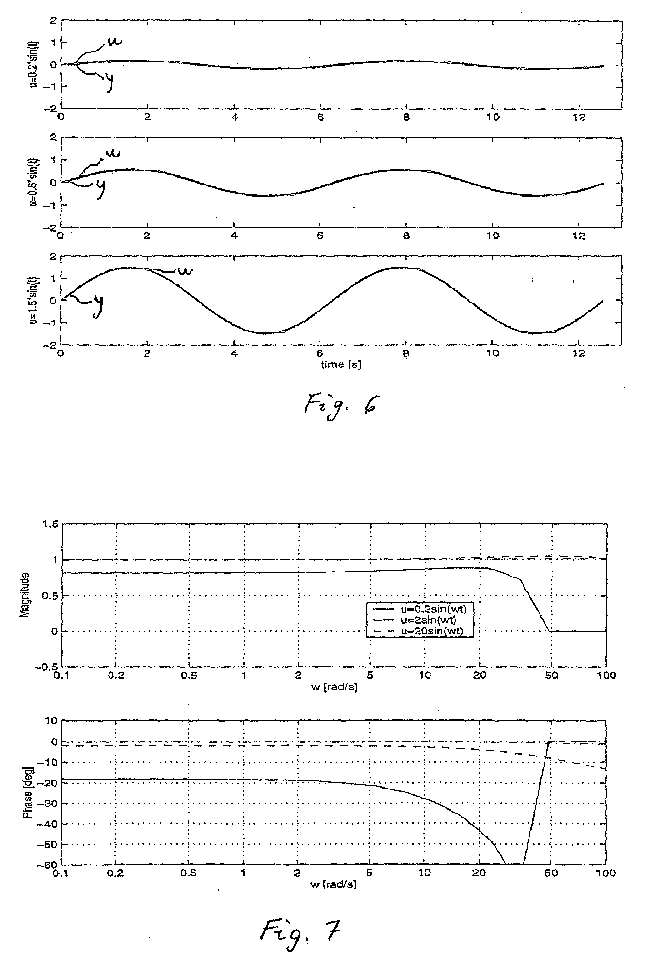

Fig. 7 schematically shows a diagram of gain and phase properties of backlash with the compensating filter F2 in fig. 5b. It is found that gain and phase properties are improved compared to the gain and phase properties of the backlash only, i.e. the gain is increased and the phase retardation is decreased.

Fig. 8 schematically shows a block diagram of an aircraft configuration in a control system for simulation of backlash. The configuration comprises a control system K, a first connection a), a second connection b) to which a lead-lag filter F1, the lead lag filter having the transfer function $G(s) = (\tau_1 s+1)/(\tau_2 s+1)$, $\tau$ being a time constant and s the Laplace transform, is connected and a third connection c) to which the compensating filter F2 according to the invention is connected and a switch for switching between said first, second and third connection. The configuration further comprises a backlash BL connectable to any of the first, second and third connections by means of the switch, and an aircraft model A/C connected to the backlash BL. In fig. 8 r is a reference signal, which could be e.g. recommended height or angle with which the aircraft is supposed to ascend or descend, u is the input signal to the backlash BL, y is the output signal after the backlash BL and z is the output signal after the aircraft model A/C.

By connecting the switch to the first connection a) there is no compensation for the backlash. By connecting the switch to the second connection b) the backlash is compensated by means of the lead-lag filter F1. By connecting the switch to the third connection c) the backlash is compensated by means of the compensating filter F2 according to the invention, as described in connection to fig. 5a and 5b, i.e. in that the output signal y after the backlash is arranged to be fed to and compared with the input signal u, creating an error signal from said comparison; the error signal is arranged to be amplified by means of the amplifying means K', and filtered by means of feeding the error signal through a low pass filter. The filtered and amplified error signal is then arranged to be fed to the input signal to produce a compensated input signal, and the compensated input signal is arranged to be fed to the backlash to produce a compensated output signal.

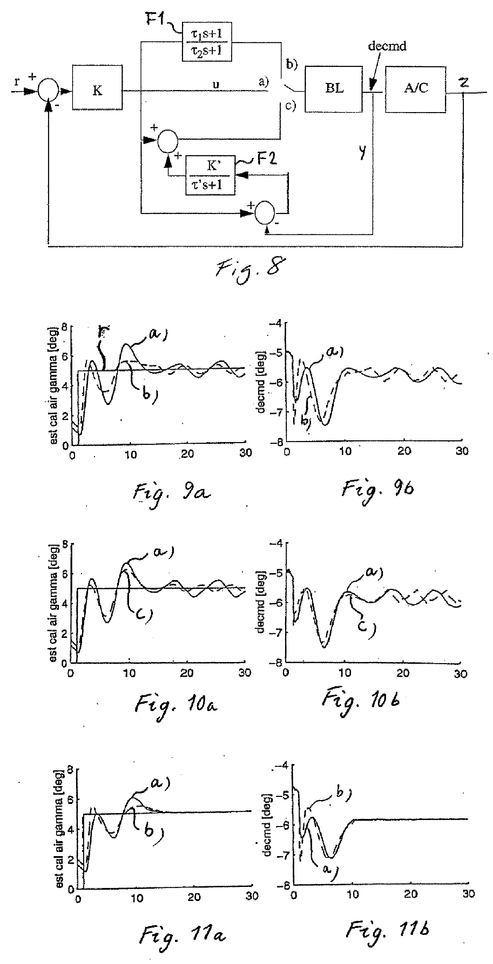

Fig. 9 shows simulation results, responses to a step in flight path angle, $\gamma$, for the aircraft configuration in fig. 8 for lead-lag filter, fig. 10 for compensating filter according to the invention, and fig. 11, as a comparison, responses with no backlash in the loop. In fig. 9-11 the responses with no compensation are shown with a continuous line, and the responses with compensation are shown with a dashed line.

From the simulation results according to fig. 9 and 10 it can be found that the use of a lead-lag filter results in higher control surface rates, than the use of the nonlinear compensating filter according to the invention, see fig. 9B and 10B, showing the position of the control surface ("decmd"). Regarding the regulated output, flight path angle, $\gamma$, the two filters perform about the same.

## Claims

1. Method for compensating for backlash of a control system, comprising the step of providing an input signal (u), the system producing an output signal (y), **characterised by** the steps of:

   - creating an error signal from a comparison between the input signal and the output signal;
   - feeding the error signal to the input signal to produce a compensated input signal; and
   - feeding the compensated input signal to the backlash to produce a compensated output signal.

2. Method according to claim 1, **characterised by** the step of:

   - amplifying the error signal prior to feeding it to the input signal.

3. Method according to claim 1 or 2, **characterised by** the step of:

   - filtering the error signal through a low pass filter prior to feeding it to the input signal.

4. Method according to any of the preceding claims, **characterised by** the step of:

   - measuring the output signal (y).

5. Method according to any of claims 1-3, **characterised by** the step of:

   - estimating the output signal y from the backlash by means of a software model.

6. Control system for compensating for backlash, the system being provided with an input signal (u) and arranged to produce an output signal (y), **characterised in that** said control system comprises means for creating an error (e) signal by means of comparing the input signal and the output signal, means for feeding the error signal to the input signal, and means for feeding the compensated input signal to the backlash to produce a compensated output signal.

7. Control system according to claim 6, further comprising amplifying means (K') arranged to amplify the error signal prior to feeding it to the input signal.

**8.** Control system according to claim 6 or 7, further comprising a low pass filter arranged to filter the error signal prior to feeding it to the input signal.

**9.** Control system according to any of claims 6-8, wherein the low pass filter has the transfer function (G(s)) according to:

$$G(s) = \frac{K'}{\tau s + 1}$$

where τ is a time constant and s is the Laplace transform.

**10.** Control system according to any of claims 6-9, further comprising means for measuring the output signal (y).

**11.** Control system according to any of claims 6-9, further comprising a software model arranged to estimate the output signal (y).

**12.** Computer programme comprising a programme code for performing the method steps of claim 1-5, when said computer programme is run on a computer.

**13.** Computer programme product comprising a program code stored on a, by a computer readable, media for performing the method steps of claim 1-5, when said computer programme is run on the computer.

**14.** Computer programme product directly storable in an internal memory into a computer, comprising a computer programme for performing the method steps according to claim 1-5, when said computer programme is run on the computer.

Fig. 1

Fig. 2a

Fig. 2b

$u = a*sin(wt)$

$y = a1*sin(wt+fi)$

Fig. 3

Fig. 4

Fig. 5a

Fig. 5b

Fig. 6

Fig. 7

Fig. 8

Fig. 9a

Fig. 9b

Fig. 10a

Fig. 10b

Fig. 11a

Fig. 11b

**European Patent Office**

**EUROPEAN SEARCH REPORT**

Application Number

EP 06 11 4156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 611 823 B1 (SELMIC RASTKO R [US] ET AL) 26 August 2003 (2003-08-26)<br>* abstract *<br>* figure 5 *<br>* column 7, lines 66,67 * | 1,2,4,6,<br>7,10-14 | INV.<br>G05B19/404 |
| Y | * column 12, lines 5-19 *<br>----- | 3,5,8,11 | |
| Y | US 4 986 150 A (OKAZAKI YUICHI [JP])<br>22 January 1991 (1991-01-22)<br>* abstract *<br>* figure 1 *<br>* column 4, lines 4-20 *<br>----- | 3,5,8,11 | |

TECHNICAL FIELDS
SEARCHED        (IPC)

G05B

The present search report has been drawn up for all claims

| Place of search | Date of completion of the search | Examiner |
|---|---|---|
| The Hague | 20 October 2006 | Hageman, Elodie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

EP 1 857 902 A1

## ANNEX TO THE EUROPEAN SEARCH REPORT
## ON EUROPEAN PATENT APPLICATION NO.

EP 06 11 4156

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2006

| Patent document cited in search report | | Publication date | Patent family member(s) | | Publication date |
|---|---|---|---|---|---|
| US 6611823 | B1 | 26-08-2003 | NONE | | |
| US 4986150 | A | 22-01-1991 | JP | 1252336 A | 09-10-1989 |
| | | | JP | 2615392 B2 | 28-05-1997 |

EPO FORM P0459

For more details about this annex : see Official Journal of the European Patent Office, No. 12/82

14